# EUROPEAN PATENT SPECIFICATION

(11) **EP 3 205 038 B1**
(45) Date of publication and mention of the grant of the patent: **17.06.2020**
(21) Application number: 14799889.2
(22) Date of filing: 08.10.2014
(51) Int. Cl.: H04L 5/00

(54) **ACTIVATION OF CARRIERS**
AKTIVIERUNG VON TRÄGERN
ACTIVATION DE PORTEUSES

(43) Date of publication of application: 16.08.2017
(73) Proprietor: Telefonaktiebolaget LM Ericsson (publ), 164 83 Stockholm (SE)
(72) Inventor: STATTIN, Magnus, SE - 194 44 UPPLANDS VÄSBY (SE); RUNE, Johan, 181 29 Lidingö (SE); RUNE, Göran, 582 52 Linköping (SE); VIKBERG, Jari, 153 38 Järna (SE); MILDH, Gunnar, SE - 19255 Sollentuna (SE)
(74) Representative: Brann AB
(86) International application number: PCT/IB2014/065151
(87) International publication number: WO 2016/055834

(56) References cited:
- US-A1- 2010 232 373
- US-A1- 2011 194 501
- US-A1- 2013 324 107
- Erik Dahlman ET AL: "Scheduling and Rate Adaptation - Chapter 13" In: "4G: LTE/LTE Advanced for Mobile Broadband", 7 October 2013 (2013-10-07), Elsevier, XP055200144, pages 321-346, page 335 - page 337

## Description

### FIELD

This disclosure pertains to the activation of carriers, and, more particularly, to the fast activation of additional downlink control channels for wireless devices.

### BACKGROUND

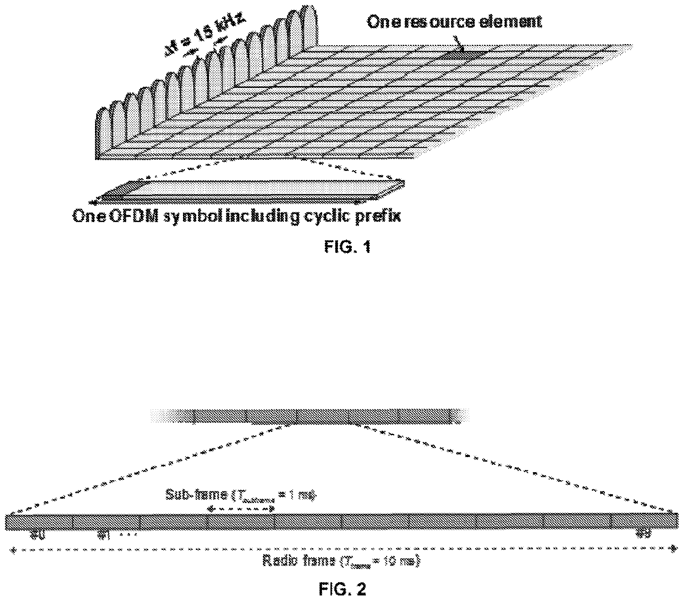

Long Term Evolution (LTE) uses orthogonal frequency divisional multiplexing (OFDM) in the downlink (DL) and Discrete Fourier Transform-spread OFDM in the uplink (UL). The basic LTE downlink physical resource can thus be seen as a time-frequency grid, where each resource element corresponds to one OFDM subcarrier during one OFDM symbol interval. FIG. 1 is a schematic diagram of a time-frequency grid showing a LTE downlink physical resource element.

In the time domain, LTE downlink transmissions are organized into radio frames of 10 ms, each radio frame consisting of ten equally-sized subframes of length T_{subframe} = 1 ms. FIG. 2 is a schematic diagram of a LTE time-domain structure.

Furthermore, the resource allocation in LTE is typically described in terms of resource blocks (RB), where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

The notion of virtual resource blocks (VRB) and physical resource blocks (PRB) has been introduced in LTE. The actual resource allocation to a wireless device (WD) is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain; thereby providing frequency diversity for data channel transmitted using these distributed VRBs.

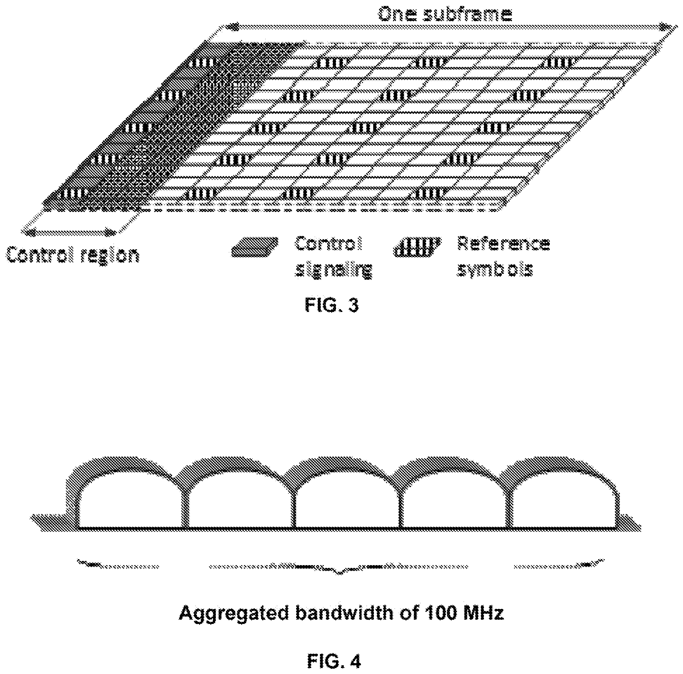

FIG. 3 is a schematic diagram of a downlink subframe. Downlink transmissions are dynamically scheduled, i.e., in each subframe the base station transmits control information about to which terminals data is transmitted and upon which resource blocks the data is transmitted, in the current downlink subframe. This control signaling is typically transmitted in the first 1, 2, 3, or 4 OFDM symbols in each subframe and the number n=1, 2, 3, or 4 is known as the Control Format Indicator (CFI). The downlink subframe also contains common reference symbols (CRS), which are known to the receiver and used for coherent demodulation of e.g. the control information. A downlink system with CFI=3 OFDM symbols as control is illustrated in FIG. 3.

FIG. 4 is a schematic diagram illustrating carrier aggregation. The LTE Rel-10 specifications have been standardized, supporting Component Carrier (CC) bandwidths up to 20 MHz (which is the maximal LTE Rel-8 carrier bandwidth). An LTE Rel-1 0 operation wider than 20 MHz is possible and appear as a number of LTE CCs to an LTE Rel-10 terminal. The straightforward way to obtain bandwidths wider than 20 MHz is by means of Carrier Aggregation (CA). CA implies that an LTE Rel-10 terminal can receive multiple CC, where the CC have, or at least the possibility to have, the same structure as a Rel-8 carrier.

The Rel-10 standard support up to 5 aggregated CCs where each CC is limited in the RF specifications to have a one of six bandwidths namely 6, 15, 25, 50, 75, or 100 RB (corresponding to 1.4,3,5, 10, 15, and 20 MHz respectively).

The number of aggregated CCs as well as the bandwidth of the individual CCs may be different for uplink and downlink. A symmetric configuration refers to the case where the number of CCs in downlink (DL) and uplink (UL) is the same whereas an asymmetric configuration refers to the case that the number of CCs is different in DL and UL. It is important to note that the number of CCs configured in the network may be different from the number of CCs seen by a terminal: A terminal may for example support more downlink CCs than uplink CCs, even though the network offers the same number of uplink and downlink CCs.

CCs are also referred to as cells or serving cells. More specifically, in an LTE network the cells aggregated by a terminal are denoted primary Serving Cell (PCell) and secondary Serving Cells (SCells). The term serving cell comprises both PCell and SCells. All WDs have one PCell and which cell is a WDs PCell is terminal specific and is considered "more important," i.e., vital control signaling and other important signaling is typically handled via the PCell. Uplink control signaling is always sent on a WDs PCell. The component carrier configured as the PCell is the primary CC whereas all other component carriers are secondary serving cells. The WD can send and receive data both on the PCell and SCells. For control signaling such as scheduling commands this could either be configured to only be transmitted and received on the PCell but where the commands are also valid for scell. or it can be configured to be transmitted and received on both PCell and SCells. Regardless of the mode of operation, the WD will only need to read. the broadcast channel in order to acquire system information parameters on the primary component carrier (PCC). System information related to the secondary component carriers (SCCs) may be provided to the WD in dedicated Radio Resource Control (RRC) messages.

During initial access a LTE Rel-10 WD behaves similar to a LTE Rel-8 terminal. Upon successful connection to the netWork, however, a Rel-10 WD may - depending on its own capabilities and the network - be configured with additional serving cells in the UL and DL. Configuration is based on RRC. Due to the heavy signaling and rather slow speed of RRC signaling it is envisioned that a terminal may be configured with multiple serving cells even though not all of them are currently used.

LTE CA supports efficient use of multiple carriers, allowing data to be sent / received over all carriers. CA supports cross-carrier scheduling, avoiding the need for the WD to listen to all carrier-control channels all the time. The solution relies on tight time synchronization between the carriers.

Dual connectivity being introduced in LTE Rel-12 supports WDs connecting to multiple carriers to send / receive data on multiple carriers at the same time. E-UTRAN supports Dual Connectivity (DC) operation whereby a multiple RX/TX WD in RRC_CONNECTED is configured to utilize radio resources provided by two distinct schedulers, located in two eNBs connected via a non-ideal backhaul over the X2. eNBs involved in dual connectivity for a certain WD may assume two different roles: an eNB may either act as a Master eNodeB (MeNB) or as a Secondary eNodeB (SeNB). In LTE Rel-12 dual connectivity a WD is connected to one MeNB and one SeNB.

### Radio Protocol Architecture:

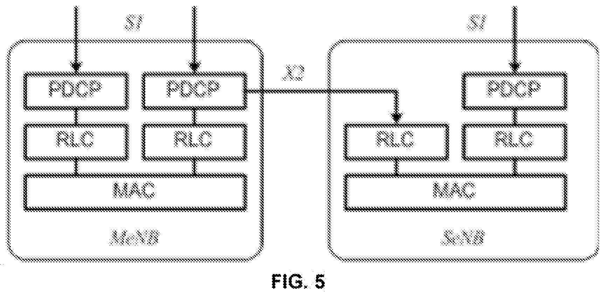

In dual connectivity, the radio protocol architecture that a particular bearer uses depends on how the bearer is setup. Three alternatives exist: Master Cell Group (MCG) bearer, Secondary Cell Group (SCG) bearer, and split bearer. Those three alternatives are depicted in FIG. 5. FIG. 5 is a schematic diagram illustrating radio protocol architecture for dual connectivity. Signaling Radio Bearers (SRB) are always of the MCG bearer and therefore only use the radio resources provided by the MeNB. NOTE: Dual Connectivity can also be described as having at least one bearer configured to use radio resources provided by the SeNB.

### Network Interfaces:

Inter-eNB control plane signaling for dual connectivity is performed by means of X2 interface signaling. Control plane signaling towards the MME is performed by means of S1 interface signaling. There is only one S1-MME connection per WD between the MeNB and the MME. Each eNB should be able to handle WDs independently, i.e. provide the PCell to some WDs while providing SCell(s) for SCG to others. Each eNB involved in dual connectivity for a certain WD owns its radio resources and is primarily responsible for allocating radio resources of its cells, respective coordination between MeNB and SeNB is performed by means of X2 interface signaling.

FIG. 6 is a schematic diagram of control plane (C-Plane) connectivity of network nodes involved in dual connectivity. FIG. 6 shows C-plane connectivity of eNBs involved in dual connectivity for a certain WD: the MeNB is C-plane connected to the MME via S1-MME, the MeNB and the SeNB are interconnected via X2-C.

FIG. 7 is a schematic diagram of user plane (U-Plane) connectivity of network nodes involved in dual connectivity. FIG. 7 shows U-plane connectivity of eNBs involved in dual connectivity for a certain WD. U-plane connectivity depends on the bearer option configured:
- For MCG bearers, the MeNB is U-plane connected to the S-GW via S1-U, the SeNB is not involved in the transport of user plane data;
- For split bearers, the MeNB is U-plane connected to the S-GW via S1-U and in addition, the MeNB and the SeNB are interconnected via X2-U; and
- For SCG bearers, the SeNB is directly connected with the S-GW via S1-U.

In summary, Dual Connectivity also makes it possible to send and receive data over all LTE carriers, without requiring tight time synchronization as in CA. This is enabled because the WD will listen to all downlink control channels on all carriers.

Tight time synchronization puts strict requirements on the backhaul between the transmitter and receivers of the different carrier which will reduce deployment flexibility, while the listening to all carriers downlink control channels would consume additional power in the WD, and potentially lead to reduced performance, assuming the WD is not expected to send and receive useful data all the time.

US 2011/194501 and US 2010/232373 describe systems and methods whereby a user equipment monitors two or more carriers.

### SUMMARY

The present disclosure describes methods and apparatuses for aggregation of data over multiple carriers, without either requiring tight synchronization between the carriers or the WD listening to the scheduling commands on all carriers at the same time.

Embodiments of the present disclosure are directed to a WD in wireless communication with a network node of a wireless communications network, the WD being configured to communicate across at least a first carrier and a second carrier. The WD may include a memory for storing instructions and information, a processor for executing instructions, and a transceiver for sending and receiving information. The transceiver, processor, and memory may work in concert so the wireless device can monitor a downlink control channel on the first carrier, receive a first command from the network node to monitor a downlink control channel on the second carrier, and based on receiving the first command from the network node, monitor the downlink control channel on the second carrier. In some embodiments, the based on receiving the first command from the network node, the WD monitors both the downlink control channel on the first carrier and the downlink control channel on the second carrier.

In certain embodiments, the first carrier is associated with a first radio access technology and the second carrier is associated with a second radio access technology that is different from the first radio access technology.

In certain embodiments, the first command provides an indication of a time window when the WD should monitor the downlink control channel on the second carrier. In some embodiments, the time window identifies a specific time duration for when the WD should monitor the downlink control channel on the second carrier. In some embodiments, the time window identifies a specific time for when the WD should start to monitor the downlink control channel on the second carrier.

In certain embodiments, the first command provides an indication of one or more downlink control channels that the WD should stop monitoring. In some embodiments, the first command provides an indication that the WD should stop monitoring the downlink control channel on the first carrier and monitor the downlink control channel on the second carrier.

After the WD monitors both the downlink control channel on the first carrier and the downlink control channel on the second carrier, certain embodiments may also include receiving a second command from the first node to stop monitoring the downlink control channel on the second carrier, and based on receiving the second command, ceasing to monitor downlink control channel on the second carrier. The second command may be received by the WD on one of the first carrier or the second carrier. The first command may be received by the WD on the first carrier. The second command may provide an indication of one or more downlink control channels that the WD should start monitoring.

In certain embodiments, the triggering from the network node to send the first command is a scheduling request or a buffer status report received by the WD.

Certain aspects of the embodiments are directed to a network node of a wireless communications network. The network node includes a transceiver for sending and receiving wireless transmissions; a memory for storing instructions and information; and a hardware processor (e.g., embodied in circuitry) for executing instructions stored in the memory. The network node may be configured to perform functions including retrieving an indication to instruct the WD to monitor a second downlink control channel on a second carrier. and instructing the WD to monitor a first downlink control channel on a first carrier or a second downlink control channel on a second carrier or both. The network node may also signal a WD to monitor a first downlink control channel on a first carrier,

In certain embodiments, the indication may be an incoming downlink packet received at the network node.

In certain embodiments, the first carrier and the second carrier may be supported by the network node.

In certain embodiments, one of the first carrier or the second carrier may be configured for carrier aggregation.

In certain embodiments, the first command is signaled to the WD based on one or more of a scheduling request or a buffer status report received by the network node.

In certain embodiments, signaling the first command to the WD is triggered by incoming downlink packets to the network node, the number of incoming downlink packets exceeding a predefined threshold.

In certain embodiments, signaling the first command to the WD is triggered by signaling received from a core network.

In certain embodiments, the signaling received from the core network comprises one or more of a change in WD-specific configuration, including WD aggregate maximum bit rate, or a change in bearer configuration for the WD, including creation, modification, or deletion of bearers for the WD.

In certain embodiments, signaling the first command to the WD is triggered by a change to a load on the first carrier.

Certain embodiments also include, after the network node signaled the WD to monitor both the downlink control channel on the first carrier and the downlink control channel on the second carrier, signaling a second command to the WD to stop monitoring the downlink control channel on one of the first carrier or the second carrier. In certain embodiments, signaling the second command to the WD is triggered by a change to a load on one or both of the first carrier or the second carrier. In certain embodiments, signaling the second command to the WD is triggered by a change in the carried traffic to or from the WD. In certain embodiments, signaling the second command to the WD is triggered by a change to a channel quality on one or both of the first carrier or the second carrier. In certain embodiments, the second command is signaled to the WD on one of the first carrier or the second carrier. In certain embodiments, the second command provides an indication of one or more downlink control channels that the WD should start monitoring.

In certain embodiments, the first command is signaled to the WD based on one or more of a scheduling request or a buffer status report received from the WD.

In certain embodiments, the first carrier is associated with a first radio access technology and the second carrier is associated with a second radio access technology that is different from the first radio access technology.

In certain embodiments, the first command provides an indication of a time window during which the WD should monitor the downlink control channel on the second carrier.

In certain embodiments, the first command provides an indication of one or more downlink control channels that the WD should stop monitoring.

In certain embodiments, the first command provides an indication of a time for when the WD is to start monitoring the downlink control channel on the second carrier or stop monitoring a downlink control channel or both.

In certain embodiments, a WD in wireless communication with a network node of a wireless communications network is configured to communicate across at least a first carrier and a second carrier. The WD can perform monitoring of a downlink control channel on the first carrier and a downlink control channel on the second carrier. The WD can receive a first command from the network node to stop monitoring a downlink control channel on the first carrier or the second carrier. Based on receiving the first command from the network node, ceasing to monitor the downlink control channel on the first carrier or the downlink control channel on the second carrier.

Various advantages of the present disclosure will be readily apparent to those of skill in the art. Among the various advantages are when a WD has little or no data to receive (or transmit) is only required to monitor a sub-set of the configured carriers, thus reducing battery consumption. Once the WD is more active and it is desirable to transmit data to the WD on additional carriers, the WD will be instructed to start monitoring additional downlink control channels. This can be done quickly (in a small optimized message), but still not requiring tight time synchronization between the carriers since the actual data scheduling on one carrier is still controlled only by that carrier. This solution combines the benefits of both CA and dual connectivity, and can be applied between different carriers of LTE, as well as between different Radio Access Technologies (RATs) (e.g. between LTE and 5G) with completely different frame structures, control channels etc.

### BRIEF DESCRIPTION OF THE DRAWINGS

FIG. 1 is a schematic diagram of a time-frequency grid showing a Long Term Evolution downlink physical resource element.
FIG. 2 is a schematic diagram of a Long Term Evolution time-domain structure.
FIG. 3 is a schematic diagram of a downlink subframe.
FIG. 4 is a schematic diagram illustrating carrier aggregation.
FIG. 5 is a schematic diagram illustrating radio protocol architecture for dual connectivity.

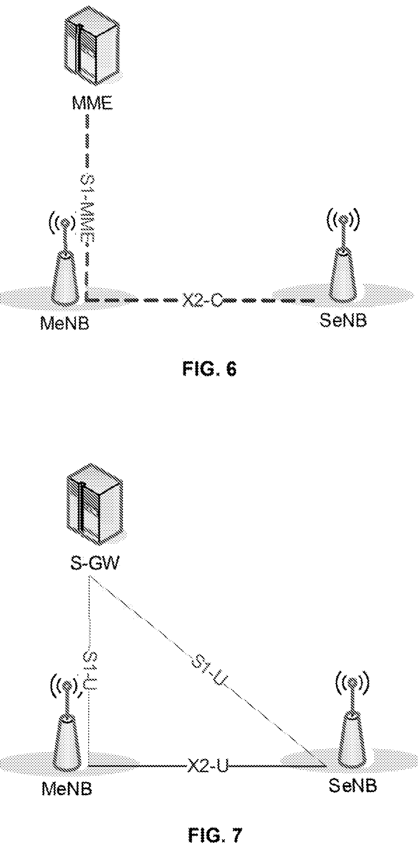

FIG. 6 is a schematic diagram of C-Plane connectivity of network nodes involved in dual connectivity.
FIG. 7 is a schematic diagram of U-Plane connectivity of network nodes involved in dual connectivity.

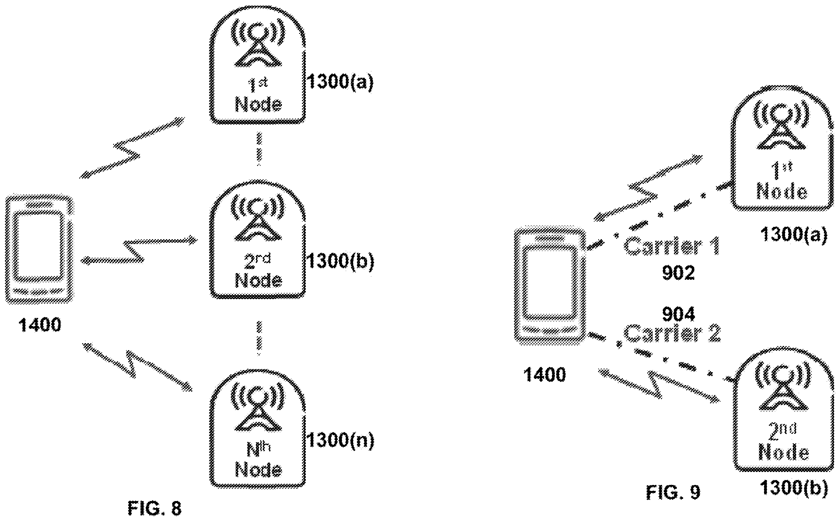

FIG. 8 is a schematic diagram of a wireless system including a wireless device in connectivity with a plurality of network nodes in accordance with embodiments of the present disclosure.
FIG. 9 is a schematic diagram of a wireless device in connectivity with two network nodes indicating carriers used for transmissions in accordance with embodiments of the present disclosure.

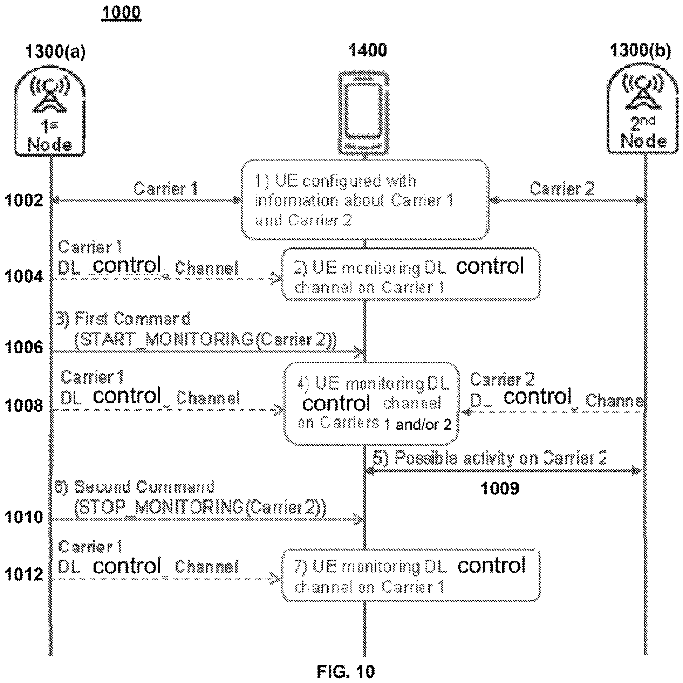

FIG. 10 is a swim-lane diagram of signaling monitoring-activation commands between network nodes and a wireless device in accordance with embodiments of the present disclosure.

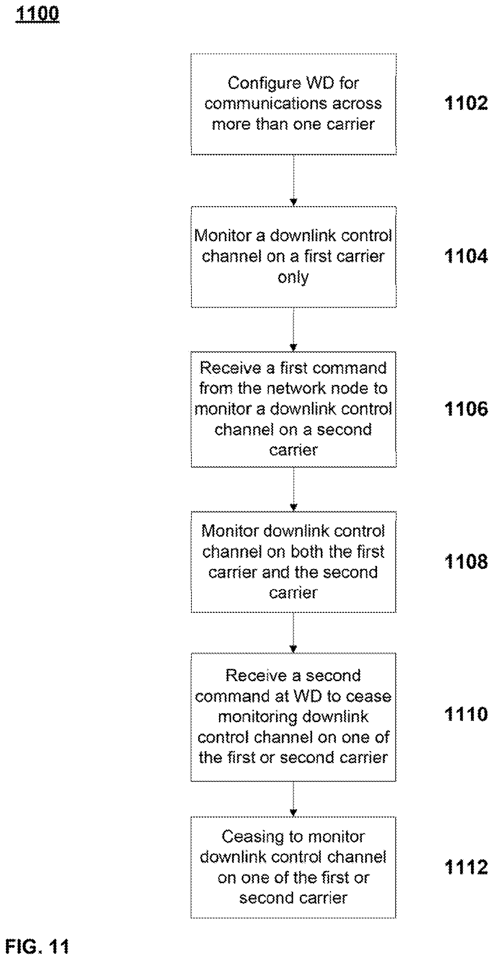

FIG. 11 is a process flowchart for activation of carriers by a wireless device in accordance with embodiments of the present disclosure.

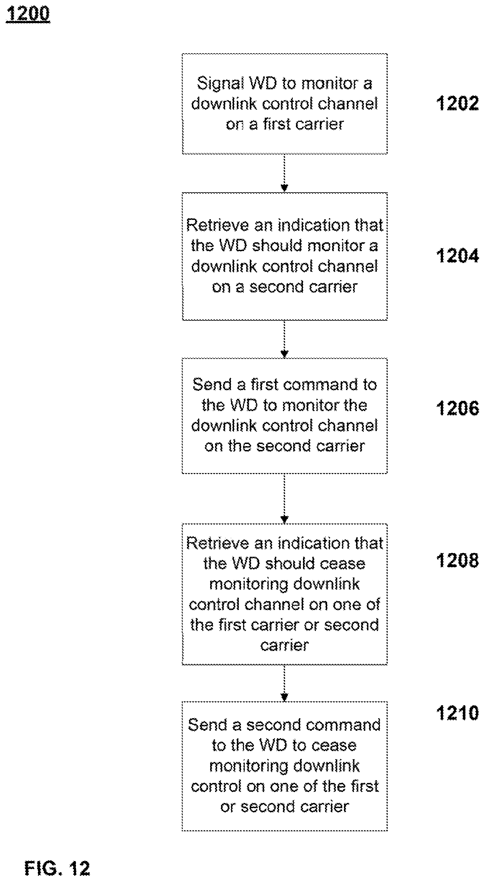

FIG. 12 is a process flowchart for a network node for activation of monitoring of carriers by a wireless device in accordance with embodiments of the present disclosure.

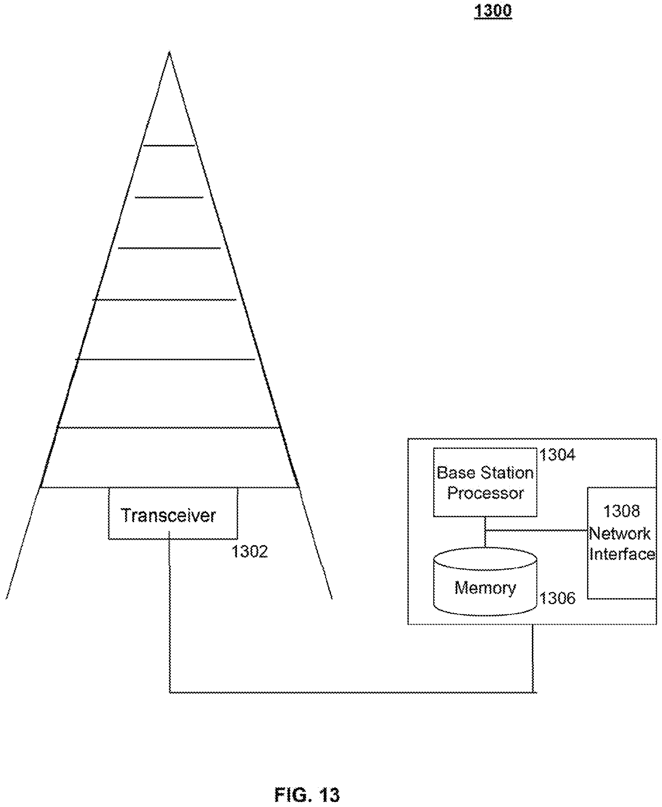

FIG. 13 is a schematic block diagram of a network node in accordance with embodiments of the present disclosure.

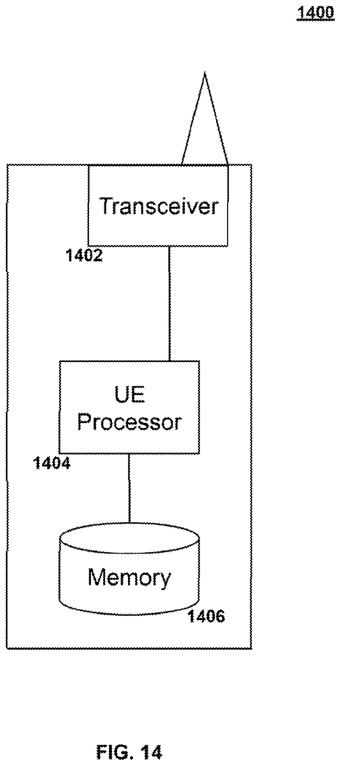

FIG. 14 is a schematic block diagram of a wireless device in accordance with embodiments of the present disclosure.

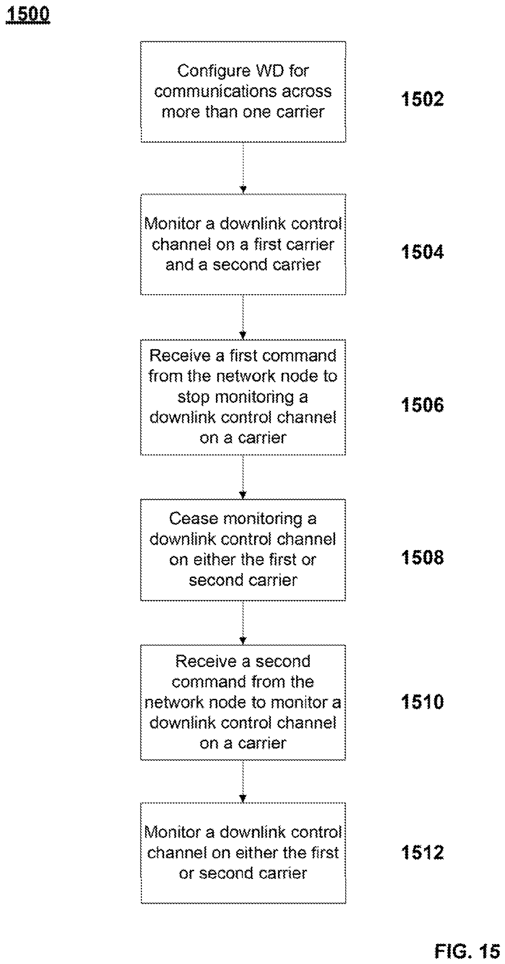

FIG. 15 is a process flow diagram for a wireless device to receive a command to cease monitoring a downlink control channel in accordance with embodiments of the present disclosure.

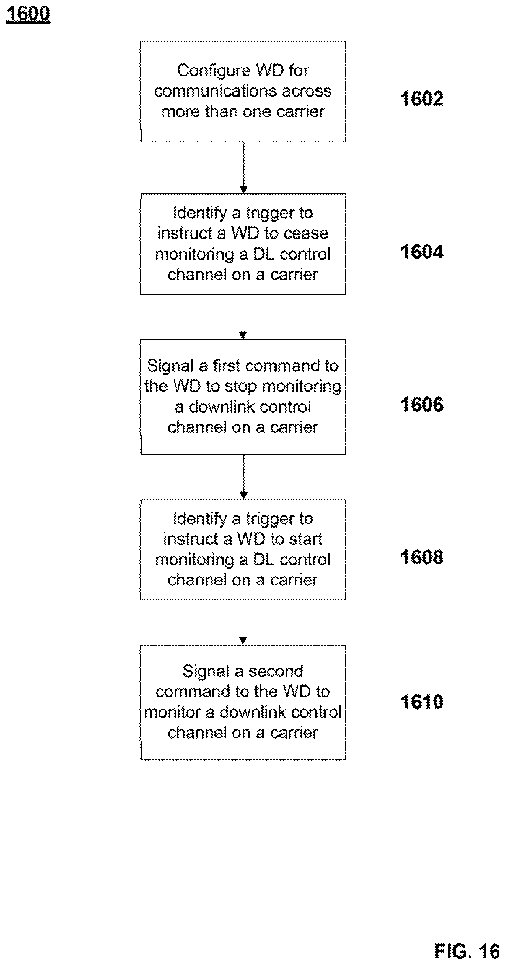

FIG. 16 is a process flow diagram for a network node to transmit a command to a wireless device to cease monitoring a downlink control channel on a carrier in accordance with embodiments of the present disclosure

### DETAILED DESCRIPTION

This disclosure is directed to supporting dual-connectivity of multi-connectivity between different carriers associated with the same or different radio access technologies, without the need for the WD to monitor all carriers all the time or utilize complicated cross carrier scheduling which requires tight time synchronizations between carriers (and is difficult to support between different RATs).

The present disclosure describes providing fast activation in the WD of receiving downlink (DL) control channels on additional carriers. The downlink control channels can include downlink scheduling assignments and uplink scheduling grants. One example of a downlink control channel is the Physical Downlink Control Channel (PDCCH) in LTE. The WD is initially (pre)configured with two or more carriers, where the carriers could be carriers of the same or different radio access technologies (RATs) (e.g. LTE, LTE-NX, GSM, UMTS, Wi-Fi, etc.). LTE-NX indicates a further evolution of LTE to cover higher frequency bands than are today possible for LTE and may or may not be backwards compatible with the current LTE. The WD is set to monitor the downlink control channel of a subset of the one or more carriers. The WD monitoring of the downlink control channel on the different carriers is dynamically controlled by a network node sending commands to the WD. These commands identify the different carriers the WD should monitor and may contain timing information for how long the commands are in effect Different triggers are also described for when the network node should send a first and a second command to the WD.

FIG. 8 is a schematic diagram of a wireless system including a wireless device in connectivity with a plurality of network nodes in accordance with embodiments of the present disclosure. The system includes a WD 1400 that is capable of being connected to multiple different carriers, possibly provided by multiple number of network nodes (e.g. base stations). The network nodes are generally shown as network node 1300, and in FIG. 8, the multiple network nodes is shown as a first node 1300(a), a second node 1300(b), and an n^{th} node 1300(n). In one exemplary case, the WD 1400 is only connected to the first node 1300(a), and the first node 1300(a) provides more than one carrier (in some cases, normal Carrier Aggregation and cross-scheduling between these carriers is not possible because, e.g., because the carriers are used for different RATs with different physical channel characteristics, or the different carriers are not synchronized). In another example, the WD 1400 can be connected to both the first node 1300(a) and the second node 1300(b) and each of these provides a single carrier. In still another example, the WD 1400 can be connected to more than two nodes, through the n^{th} node 1300(n), and each of these nodes may provide one or more carriers for the WD 1400.

FIG. 9 is a schematic diagram of a wireless device 1400 in connectivity with two network nodes 1300(a) and 1300(b) indicating carriers used for transmissions in accordance with embodiments of the present disclosure. In this example, the WD 1400 can be connected to two different nodes, 1^{st} Node 1300(a) and 2^{nd} Node 1300(b). 1st Node 1300(a) provides Carrier 1 902 and 2nd Node 1300(b) provides Carrier 2 904. The WD 1 400 can selectively monitor one or both of Carrier 1 or Carrier 2 depending on commands received from one of the network nodes.

FIG. 10 is a swim-lane diagram 1000 of signaling activation commands between network nodes 1300(a), 1300(b) and a wireless device 1400 in accordance with embodiments of the present disclosure. The WD 1400 is (pre)configured with information about Carriers 1 and 2 (1002). This configuration can be performed between the WD 1400 and the 1st Node 1300(a), or between WD and the 2nd Node 1300(b), or from both nodes. As part of this configuration, the WD is also configured to only monitor the DL control channel on Carrier 1. Thus, at the outset, the WD is monitoring DL control channel on Carrier 1 (only) (1004).

Based on a trigger, the 1^{st} Node 1300(a) sends a First Command to the WD 1400 indicating that it shall also start monitoring DL control channel on Carrier 2 (1006). This action may be triggered by different possible events that are described later. Accordingly, the WD 1400 monitors DL control channel on both Carrier 1 and Carrier 2 (1008). Some activity may take place on Carrier 2, for example the WD 1400 may receive a DL control command, or DL scheduling assignment and receive downlink data (1009), or the WD may receive UL scheduling grant or UL scheduling command and send uplink data (not shown in Figure 10).

Based on another trigger, the 1st Node 1300(a) sends a Second Command to the WD 1400 indicating that it shall stop monitoring DL control channel on Carrier 2 (1010). This action may be triggered by different possible events that are described later. Accordingly, the WD 1400 monitors DL control channel on Carrier 1 (only) (1012). In some embodiments, the second command could instruct the WD 1400 to stop monitoring DL control channel on Carrier 1.

Additionally, embodiments may include the following aspects:
The WD can be pre-configured with two or more carriers, where the carriers could be carriers of the same or different RATs (e.g. LTE, LTE-NX, GSM, UMTS, Wi-Fi (any flavor of 802.11 a, b, g, n, ac, ad, ax, ...)). LTE-NX indicates a further evolution of LTE to cover higher frequency bands than are today possible for LTE and may or may not be backwards compatible with the current LTE.

The WD can be set in a mode where it only needs to monitor the downlink control channel of a subset of the carriers (one or more carrier).

A first command can be sent to the WD on one of the carriers that the WD is monitoring the downlink control channel on. The first command could be a special L1/L2 control message (sent for example on the downlink control channel, e.g., PDCCH) or a L2 MAC Control Element or an RRC command sent for example on a data channel (such as Downlink Shared Channel, DL-SCH, in LTE). The command will at a minimum contain instructions for the WD to start monitoring one or more downlink control channels.

Upon reception of the first command the WD can start to monitor a downlink control channel on one of the pre-configured carriers and is able to start sending and receiving data on that channel.

A second command can be sent to the WD on any carrier, instructing the WD to not monitor a downlink control channel on one of the pre-configured carriers. The second command could be a special L1/L2 control message (sent for example on downlink control channel, e.g. PDCCH in LTE) or a L2 MAC Control Element or an RRC command sent for example on data channel (DL-SCH). The command will at a minimum contain instructions for the WD to stop monitoring one or more downlink control channels.

The first command contains information about one or more downlink control channels that the WD should stop monitoring.

The second command contains information about one or more downlink control channels that the WD should start monitoring.

The first or second command may contain information about a specific time window (including start and stop) when one or more downlink control channels should be monitored or not monitored. The first or second command contains information about a specific time window (including start and stop) when one or more downlink control channels should or should not be monitored as well as information what the WD should do after this time window (e.g. return to monitoring another channel).

Additionally, the first command can immediately cause the WD to monitor the downlink control channel or the first command can indicate a time window in the future for the WD to begin monitoring (and, in some embodiments, stop monitoring the downlink control channel).

The indication of a time window when the WD should monitor the downlink control channel on the second carrier could be in the form of an explicit signaled value (e.g., 500 ms, 1s, 2s, 4s, ...) or it could be an index to a table with pre-configured values, either signaled from the network at an earlier occasion, or it could be hard coded in the standard. The indication of a time window could indicate that a time window should be used, and the value of that time window can be either signaled from the network at an earlier occasion, or hard coded in the standard.

The time window could be used to indicate an absolute time for which the downlink control channel should be monitored, or it can indicate a time which dictates how long the WD should monitor the downlink control channel since the last activity related to the WD on that downlink control channel. An example of an activity could be uplink or downlink control of the WD. In the latter case the WD will (re)start a timer at any activity on the downlink control channel, and if this timer exceeds the window the WD would stop monitor the downlink control channel.

The time window may also be replaced by a single time indication (i.e. not a start and an end), indicating a time in the future when the WD should start to monitor the downlink control channel of a certain carrier (but without a specified end time for the monitoring) or a time in the future when the WD should stop monitoring the downlink control channel of a certain carrier.

The triggering for the network node to send the first command can be a scheduling request or buffer status report transmitted by the WD and received by the network node.

The triggering for the network node to send the first command can be receiving of an incoming DL packet at one of the network nodes or base stations.

The triggering for the network node to send the first command can be receiving of incoming DL packets above a specific threshold (e.g. in terms of data volume, number of packets, DL buffer content size, data rate or packet rate) at one of the network nodes or base stations. Similarly, the triggering for the network node to send the first command can be generation of UL packets waiting to be sent in the WD, e.g. indicated to the network node in the form of buffer status report(s) from the WD.

The triggering for the network node to send the first command can be any signaling received from the core network at one of the network nodes or base stations. Such signaling may either be on WD-level, for example changing WD-specific configuration such as WD Aggregate Maximum Bit Rate (AMBR), or bearer configuration for the WD, for example creation, modification and/or deletion of bearers for the WD.

The triggering for the network node to send the first command can include changes to the load on the carriers.

The triggering for the network node to send the second command can include changes to the load on the carriers. Another example of a trigger for the second command is a change in the carried traffic (e.g., throughput) to or from the WD. For example, if the traffic decreases below a threshold (in terms of e.g. data rate), the WD is instructed to stop monitoring the downlink control channel on the second carrier (and monitor the first camera Additionally, changes in channel quality can trigger the network node to send the second command or the first command.

In addition, all the triggers described above for the network node to send the first command can also be used as triggers for the network node to send the second command.

The first command can provide an indication of a time for when the WD is to start monitoring the downlink control channel on the second carrier or stop monitoring a downlink control channel or both. For example, the first command can indicate that the WD should immediately monitor the downlink control channel or should do so at some time in the future. Similarly, the first command can indicate that the WD should stop monitoring a downlink control channel immediately or at some point in the future.

The different carriers assigned to the WD can be supported by one network node or base station.

The different carriers assigned to the WD can be supported by different network nodes or base stations.

One set of the carriers assigned to the WD can be supported by one network node or base station and using Carrier Aggregation (and Cross-scheduling) and another set of the carriers is not using Carrier Aggregation.

FIG. 11 is a process flowchart 1100 for activation of monitoring of carriers for a wireless device in accordance with embodiments of the present disclosure. The WD is (pre)configured to monitor downlink control channel on more than one carrier (1102). The WD, at the outset of the flowchart, is monitoring the DL control channel on a first carrier (1104). The WD may use default settings to monitor the first carrier or it may receive a signal from the network node that instructs the WD to monitor the first carrier. The WD receives a first command from a network node serving the WD to monitor a downlink control channel on a second carrier (1106). The WD accordingly monitors the first carrier and the second carrier (1108). The first and second carriers can be supported by the network node or by more than one network nodes, and can be of one or more RATs.

The WD can receive a second command to cease monitoring the downlink control channel on one of the carriers (1110). Based on receiving the second command, the WD ceases monitoring the downlink control channel on either the first or second carriers, depending on the second command (1112).

FIG. 12 is a process flowchart 1200 for a network node for activation of monitoring of carriers for a wireless device in accordance with embodiments of the present disclosure. The network node instructs a WD to monitor a downlink control channel on a first carrier (1202). The network node can retrieve an indication (e.g., a trigger) that the WD should monitor a downlink control channel on a second carrier (1204). In some embodiments, the network node can receive an indication from, e.g., the WD or from the core network that the WD should monitor the DL control channel on the second carrier. In some embodiments, the network node can use information it obtains from measurements and use that information to establish an indication that the WD should monitor the DL control channel on the second carrier. The indication can be an incoming downlink packet, or packets, received at the network node or one or more packets becoming available for UL transmission from the WD.

The network node sends a first command to the WD to monitor the downlink control channel on the second carrier (1206). The first command may be signaled to the WD based on one or more of a scheduling request or a buffer status report received by the network node. Signaling the first command to the WD can be triggered by incoming downlink packets to the network node, the number of incoming downlink packets exceeding a predefined threshold (e.g. in terms of data volume, number of packets, DL buffer content size, data rate or packet rate). As mentioned previously, signaling the first command to the WD can be triggered by signaling received from a core network. The signaling received from the core network comprises one or more of a change in WD-specific configuration, including WD Aggregate Maximum Bit Bate, or a change in bearer configuration for the WD, including creation, modification, or deletion of bearers for the WD. In some embodiments, signaling the first command to the WD is triggered by a change to a load on the first or the second carrier or both.

In some embodiments, the first command is signaled to the WD based on one or more of a scheduling request or a buffer status report received from the WD. In some embodiments, the first command provides an indication of a time window during which the WD should monitor the downlink control channel on the second carrier. The time window may be a duration during which the WD monitors the downlink control channel on the second carrier; the time window may be a duration during which the WD should start monitoring the downlink control channel on the second carrier; or the time window may define a specific time for when the WD should start monitoring the downlink control channel on the second carrier.

In some embodiments, the first command provides an indication of one or more downlink control channels that the WD should stop monitoring. The WD can stop monitoring the first carrier or the second carrier. In some embodiments, the first command can provide an indication of a time for when the WD is to start monitoring the downlink control channel on the second carrier or stop monitoring a downlink control channel or both.

The first carrier and the second carrier may be supported by the network node. In some embodiments, the first carrier and the second carrier may be of different RATs. That is, the first carrier may be associated with a first radio access technology and the second carrier is associated with a second radio access technology that is different from the first radio access technology.

In some embodiments, one of the first carrier or the second carrier may be configured for carrier aggregation.

The network node can retrieve another indication (e.g., a trigger) that the WD should cease monitoring either the first or second carrier (1208). Based on the indication, the network node can signal a second command to the WD instructing the WD to cease monitoring the first or second carrier, depending on the command (1210). In some embodiments, signaling the second command to the WD is triggered by a change to a load on one or both of the first carrier or the second carrier. In some embodiments, signaling the second command to the WD may be triggered by a change in the carried traffic to or from (or both to and from) the WD. In some embodiments, signaling the second command to the WD may be triggered by a change to a channel quality on one or both of the first carrier or the second carrier.

In addition, all the triggers described above for the network node to send the first command can also be used as triggers for the network node to send the second command.

The second command may be signaled to the WD on one of the first carrier or the second carrier. The second command can also provide an indication of one or more downlink control channels that the WD should start monitoring.

FIG. 13 is a schematic block diagram of a network node 1300 in accordance with embodiments of the present disclosure. The network node 1300 includes a transceiver 1302, a processor 1304, a memory 1306, and a network interface 1308. The network node 1300 can represent any of the network nodes described herein. The network node 1300 is configured to send and receive wireless signals to and from a WD. Additionally, the network node 1300 can communicate either wirelessly or by-wire with other network nodes and network elements. The network node 1300 can also interface with an evolved packet core or other core network through the network interface 1308. The network node can be a base station, an eNB, or any other type of network node depending on the RAT.

FIG. 14 is a schematic block diagram of a wireless device 1400 in accordance with embodiments of the present disclosure. The wireless device 1400 can be a user equipment (UE), cellular telephone, smartphone, tablet, PDA, MTC device, or another wireless device that can communicate wirelessly with other wireless devices, either directly or through a network node or multiple network nodes. The wireless device 1400 includes a transceiver 1402 for sending and receiving signals wirelessly, a processor 1404 for executing instructions, and a memory 1406 for storing instructions and information. The wireless device 1400 can be preconfigured to communicate with more than one network node. For example, the wireless device 1400 can receive commands from a network node, and based on the received commands, start or cease monitoring carriers in downlink control channels.

FIG. 15 is a process flow diagram 1500 for a wireless device to receive a command to cease monitoring a downlink control channel. The WD is preconfigured to monitor a downlink control channel on multiple carriers (1502 or initial state). In this embodiment, the WD is monitoring a downlink control channel on at least a first carrier and a second carrier (or more carriers) (1504). The WD can receive a first command from a network node to cease monitoring downlink control channel on the first or second carrier (1506). The first command can be sent based on one or more triggers previously discussed above. The reducing in the number of carriers the WD monitors can reduce battery consumption as well as other advantages. Upon receiving the first command, the WD can cease monitoring either the downlink control channel on the first carrier or the downlink control channel on the second carrier (1508). The first command can include information similar to the first command previously described. The first and second carriers may be of the same RAT or may be of different RATs. In some embodiments, a second command can be sent to the WD from the network node based on one or more triggers (as previously discussed) to start monitoring a downlink control channel on either the first carrier or the second carrier (depending on the command) (1510). The WD can then start monitoring the downlink control channel on either the first carrier or the second carrier (1512).

FIG. 16 is a process flow diagram 1600 for a network node to transmit a command to a wireless device to cease monitoring a downlink control channel on a carrier The WD is preconfigured to monitor a downlink control channel on multiple carriers (1602 or initial state). The network node can identify a trigger (as described above) indicating that the WD should cease monitoring a downlink control channel on the first carrier or the second carrier (1604). The network node can signal a first command from a network node to cease monitoring downlink control channel on one or more carrier (1506). The first command can be sent based on one or more triggers previously discussed above. The reducing in the number of carriers the WD monitors can reduce battery consumption as well as other advantages. The first command can include information similar to the first command previously described. The first and second carriers may be of the same RAT or may be of different RATs. Upon receiving the first command, the WD can cease monitoring either the downlink control channel on the first carrier or the downlink control channel on the second carrier. The network node can identify a trigger (as described above) that the WD should begin monitoring a downlink control channel on a carrier (1608). In some embodiments, the network node can signal a second command to the WD based on one or more triggers (as previously discussed) to start monitoring a downlink control channel on either the first carrier or the second carrier ( depending on the command) (1610).

## Claims

1. A method performed at a wireless device, WD, the WD in wireless communication with a network node of a wireless communications network, the WD configured to communicate across at least a first carrier and a second carrier, the method comprising:
monitoring (1504) a downlink control channel on the first carrier and a downlink control channel on the second carrier;
the method **characterised in** further comprising:
receiving (1110; 1506) a second command from the network node to stop monitoring a downlink control channel on the first carrier or the second carrier; and
based on receiving the second command from the network node, ceasing (1112; 1508) to monitor the downlink control channel on the first carrier or the downlink control channel on the second carrier.

2. The method of claim 1, wherein the second command provides an indication of a time window during which the WD should cease to monitor the downlink control channel on either the first carrier or the second carrier.

3. The method of claim 1 wherein, preceding the step of monitoring, the method further comprises:
monitoring (1104) a downlink control channel on the first carrier;
receiving (1106) a first command from the network node to monitor a downlink control channel on the second carrier; and
based on receiving the first command from the network node, monitoring (1108) the downlink control channel on both the downlink control channel on the first carrier and the downlink control channel on the second carrier.

4. The method of claim 1 or 3, wherein the first carrier is associated with a first radio access technology and the second carrier is associated with a second radio access technology that is different from the first radio access technology.

5. The method of claim 3, wherein the first command provides an indication of a time window during which the WD should monitor the downlink control channel on the second carrier.

6. The method of claim 3, wherein the first command provides an indication of a time for when the WD is to start monitoring the downlink control channel on the second carrier or stop monitoring a downlink control channel or both.

7. The method of claim 3, wherein the second command is received by the WD on one of the first carrier or the second carrier.

8. The method of claim 3, wherein the second command provides an indication of one or more downlink control channels that the WD should start monitoring.

9. The method of claim 3, further comprising:
transmitting one or more of a scheduling request and a buffer status report to the network node, wherein sending of the first command is triggered at the network node based on the one or more of a scheduling request or a buffer status report transmitted by the WD.

10. A wireless device, WD, (1400) in communication with a network node of a wireless communications network, the WD configured to communicate across at least a first carrier and a second carrier, the WD comprising:
a memory (1406) for storing instructions and information;
a processor (1404) for executing instructions; and
a transceiver (1402) for sending and receiving information across the wireless communications network, the WD configured to:
monitor a downlink control channel on the first carrier;
receive a first command from the network node to monitor a downlink control channel on the second carrier; and
based on receiving the first command from the network node, monitor both the downlink control channel on the first carrier and the downlink control channel on the second carrier;
wherein the WD is **characterised in that**, after the WD monitors both the downlink control channel on the first carrier and the downlink control channel on the second carrier, the WD is further configured to:
receive a second command from the network node to stop monitoring the downlink control channel on the first carrier or the second carrier; and
based on receiving the second command from the network node, cease to monitor the downlink control channel on the first carrier or the downlink control channel on the second carrier.

11. The WD of claim 10, wherein triggering from the network node to send the first command is a scheduling request or a buffer status report received by the WD.

12. The WD of claim 10, wherein the first carrier is associated with a first radio access technology and the second carrier is associated with a second radio access technology that is different from the first radio access technology.

13. The WD of claim 10, wherein the first command provides an indication of a time window when the WD should monitor the downlink control channel on the second carrier.

14. The WD of claim 10, wherein the second command is received by the WD on one of the first carrier or the second carrier.

15. The WD of claim 10, wherein the first command provides an indication of a time for when the WD is to start monitoring the downlink control channel on the second carrier or stop monitoring a downlink control channel or both.

## Patentansprüche

1. Verfahren, durchgeführt an einer Drahtlosvorrichtung (wireless device - WD), wobei die WD in Drahtloskommunikation mit einem Netzwerkknoten eines Drahtloskommunikationsnetzwerks steht, wobei die WD konfiguriert ist, um über zumindest einen ersten Träger und einen zweiten Träger zu kommunizieren, wobei das Verfahren Folgendes umfasst:
Überwachen (1504) eines Downlink-Steuerkanals an dem ersten Träger und eines Downlink-Steuerkanals an dem zweiten Träger;
wobei das Verfahren **dadurch gekennzeichnet ist, dass** es ferner Folgendes umfasst:
Empfangen (1110; 1506) eines zweiten Befehls von dem Netzwerkknoten, mit dem Überwachen eines Downlink-Steuerkanals an dem ersten Träger oder dem zweiten Träger aufzuhören; und
basierend auf dem Empfangen des zweiten Befehls von dem Netzwerkknoten, Beenden (1112; 1508) des Überwachens des Downlink-Steuerkanals an dem ersten Träger oder des Downlink-Steuerkanals an dem zweiten Träger.

2. Verfahren nach Anspruch 1, wobei der zweite Befehl eine Angabe eines Zeitfensters bereitstellt, während dessen die WD das Überwachen des Downlink-Steuerkanals an dem ersten Träger oder dem zweiten Träger beenden sollte.

3. Verfahren nach Anspruch 1, wobei das Verfahren vor dem Schritt des Überwachens ferner Folgendes umfasst:
Überwachen (1104) eines Downlink-Steuerkanals an dem ersten Träger;
Empfangen (1106) eines ersten Befehls von dem Netzwerkknoten, einen Downlink-Steuerkanal an dem zweiten Träger zu überwachen; und
basierend auf dem Empfangen des ersten Befehls von dem Netzwerkknoten, Überwachen (1108) des Downlink-Steuerkanals sowohl an dem Downlink-Steuerkanal an dem ersten Träger als auch dem Downlink-Steuerkanal an dem zweiten Träger.

4. Verfahren nach Anspruch 1 oder 3, wobei der erste Träger mit einer ersten Funkzugangstechnologie verbunden ist und der zweite Träger mit einer zweiten Funkzugangstechnologie verbunden ist, die sich von der ersten Funkzugangstechnologie unterscheidet.

5. Verfahren nach Anspruch 3, wobei der erste Befehl eine Angabe eines Zeitfensters bereitstellt, während dessen die WD den Downlink-Steuerkanal an dem zweiten Träger überwachen sollte.

6. Verfahren nach Anspruch 3, wobei der erste Befehl eine Angabe einer Zeit bereitstellt, wann die WD das Überwachen des Downlink-Steuerkanals an dem zweiten Träger beginnen oder das Überwachen eines Downlink-Steuerkanals aufhören soll oder beides.

7. Verfahren nach Anspruch 3, wobei der zweite Befehl durch die WD an einem von dem ersten Träger oder dem zweiten Träger empfangen wird.

8. Verfahren nach Anspruch 3, wobei der zweite Befehl eine Angabe von einem oder mehreren Downlink-Steuerkanälen bereitstellt, mit deren Überwachung die WD beginnen sollte.

9. Verfahren nach Anspruch 3, ferner umfassend:
Übertragen von einem oder mehreren von einer Scheduling-Anfrage und einem Pufferstatusbericht an den Netzwerkknoten, wobei das Senden des ersten Befehls an dem Netzwerkknoten basierend auf dem einen oder den mehreren von einer Scheduling-Anfrage oder einem Pufferstatusbericht übertragen durch die WD ausgelöst wird.

10. Drahtlosvorrichtung, WD, (1400) in Kommunikation mit einem Netzwerkknoten eines Drahtloskommunikationsnetzwerks, wobei die WD konfiguriert ist, um über zumindest einen ersten Träger und einen zweiten Träger zu kommunizieren, wobei die WD Folgendes umfasst:
einen Speicher (1406) zum Speichern von Anweisungen und Informationen;
einen Prozessor (1404) zum Ausführen von Anweisungen; und
einen Sendeempfänger (1402) zum Senden und Empfangen von Informationen über das Drahtloskommunikationsnetzwerk, wobei die WD für Folgendes konfiguriert ist:
Überwachen eines Downlink-Steuerkanals an dem ersten Träger;
Empfangen eines ersten Befehls von dem Netzwerkknoten, einen Downlink-Steuerkanal an dem zweiten Träger zu überwachen; und basierend auf dem Empfangen des ersten Befehls von dem Netzwerkknoten, Überwachen sowohl des Downlink-Steuerkanals an dem ersten Träger als auch des Downlink-Steuerkanals an dem zweiten Träger;
wobei die WD **dadurch gekennzeichnet ist, dass**, nachdem die WD sowohl den Downlink-Steuerkanal an dem ersten Träger als auch den Downlink-Steuerkanal an dem zweiten Träger überwacht, die WD ferner für Folgendes konfiguriert ist:
Empfangen eines zweiten Befehls von dem Netzwerkknoten, mit dem Überwachen des Downlink-Steuerkanals an dem ersten Träger oder dem zweiten Träger aufzuhören; und
basierend auf dem Empfangen des zweiten Befehls von dem Netzwerkknoten, Beenden des Überwachens des Downlink-Steuerkanals an dem ersten Träger oder des Downlink-Steuerkanals an dem zweiten Träger.

11. WD nach Anspruch 10, wobei das Auslösen von dem Netzwerkknoten, um den ersten Befehl zu senden, eine Scheduling-Anfrage oder ein Pufferstatusbericht empfangen durch die WD ist.

12. WD nach Anspruch 10, wobei der erste Träger mit einer ersten Funkzugangstechnologie verbunden ist und der zweite Träger mit einer zweiten Funkzugangstechnologie verbunden ist, die sich von der ersten Funkzugangstechnologie unterscheidet.

13. WD nach Anspruch 10, wobei der erste Befehl eine Angabe eines Zeitfensters bereitstellt, wann die WD den Downlink-Steuerkanal an dem zweiten Träger überwachen sollte.

14. WD nach Anspruch 10, wobei der zweite Befehl durch die WD an einem von dem ersten Träger oder dem zweiten Träger empfangen wird.

15. WD nach Anspruch 10, wobei der erste Befehl eine Angabe einer Zeit bereitstellt, wann die WD das Überwachen des Downlink-Steuerkanals an dem zweiten Träger beginnen oder das Überwachen eines Downlink-Steuerkanals aufhören soll oder beides.

## Revendications

1. Procédé exécuté sur un dispositif sans fil, WD, le WD étant en communication sans fil avec un nœud de réseau d'un réseau de communications sans fil, le WD étant configuré pour communiquer à travers au moins une première porteuse et une seconde porteuse, le procédé comprenant :
la surveillance (1504) d'un canal de commande de liaison descendante sur la première porteuse et un canal de commande de liaison descendante sur la seconde porteuse ;
le procédé étant **caractérisé en ce qu'**il comprend en outre :
la réception (1110 ; 1506) d'une seconde commande du nœud de réseau pour arrêter la surveillance d'un canal de commande de liaison descendante sur la première porteuse ou la seconde porteuse ; et
sur la base de la réception de la seconde commande du nœud de réseau, l'arrêt (1112 ; 1508) de la surveillance du canal de commande de liaison descendante sur la première porteuse ou du canal de commande de liaison descendante sur la seconde porteuse.

2. Procédé selon la revendication 1, dans lequel la seconde commande fournit une indication d'une fenêtre temporelle pendant laquelle le WD doit arrêter de surveiller le canal de commande de liaison descendante sur la première porteuse ou la seconde porteuse.

3. Procédé selon la revendication 1, dans lequel, avant l'étape de surveillance, le procédé comprend en outre :
la surveillance (1104) d'un canal de commande de liaison descendante sur la première porteuse ;
la réception (1106) d'une première commande du nœud de réseau pour surveiller un canal de commande de liaison descendante sur la seconde porteuse ; et
sur la base de la réception de la première commande du nœud de réseau, la surveillance (1108) du canal de commande de liaison descendante à la fois sur le canal de commande de liaison descendante sur la première porteuse et le canal de commande de liaison descendante sur la seconde porteuse.

4. Procédé selon la revendication 1 ou 3, dans lequel la première porteuse est associée à une première technologie d'accès radio et la seconde porteuse est associée à une seconde technologie d'accès radio qui est différente de la première technologie d'accès radio.

5. Procédé selon la revendication 3, dans lequel la première commande fournit une indication d'une fenêtre temporelle pendant laquelle le WD doit surveiller le canal de commande de liaison descendante sur la seconde porteuse.

6. Procédé selon la revendication 3, dans lequel la première commande fournit une indication d'un moment où le WD doit commencer à surveiller le canal de commande de liaison descendante sur la seconde porteuse ou arrêter de surveiller un canal de commande de liaison descendante, ou les deux.

7. Procédé selon la revendication 3, dans lequel la seconde commande est reçue par le WD sur l'une de la première porteuse ou de la seconde porteuse.

8. Procédé selon la revendication 3, dans lequel la seconde commande fournit une indication d'un ou de plusieurs canaux de commande de liaison descendante que le WD doit commencer à surveiller.

9. Procédé selon la revendication 3, comprenant en outre :
la transmission de l'un ou de plusieurs d'une demande de planification et d'un rapport d'état de tampon au nœud de réseau, dans lequel l'envoi de la première commande est déclenché au niveau du nœud de réseau sur la base de l'un ou de plusieurs d'une demande de planification ou d'un rapport d'état de tampon transmis par le WD.

10. Dispositif sans fil, WD, (1400) en communication avec un nœud de réseau d'un réseau de communications sans fil, le WD étant configuré pour communiquer à travers au moins une première porteuse et une seconde porteuse, le WD comprenant :
une mémoire (1406) pour stocker des instructions et des informations ;
un processeur (1404) pour exécuter des instructions ; et
un émetteur-récepteur (1402) pour envoyer et recevoir des informations sur le réseau de communications sans fil, le WD étant configuré pour :
surveiller un canal de commande de liaison descendante sur la première porteuse ;
recevoir une première commande du nœud de réseau afin de surveiller un canal de commande de liaison descendante sur la seconde porteuse ; et
sur la base de la réception de la première commande du nœud de réseau, surveiller à la fois le canal de commande de liaison descendante sur la première porteuse et le canal de commande de liaison descendante sur la seconde porteuse ;
dans lequel le WD est **caractérisé en ce que**, une fois que le WD surveille à la fois le canal de commande de liaison descendante sur la première porteuse et le canal de commande de liaison descendante sur la seconde porteuse, le WD est en outre configuré pour :
recevoir une seconde commande du nœud de réseau pour arrêter la surveillance du canal de commande de liaison descendante sur la première porteuse ou la seconde porteuse ; et
sur la base de la réception de la seconde commande du nœud de réseau, arrêter de surveiller le canal de commande de liaison descendante sur la première porteuse ou le canal de commande de liaison descendante sur la seconde porteuse.

11. WD selon la revendication 10, dans lequel le déclenchement à partir du nœud de réseau pour envoyer la première commande est une demande de planification ou un rapport d'état de tampon reçu par le WD.

12. WD selon la revendication 10, dans lequel la première porteuse est associée à une première technologie d'accès radio et la seconde porteuse est associée à une seconde technologie d'accès radio qui est différente de la première technologie d'accès radio.

13. WD selon la revendication 10, dans lequel la première commande fournit une indication d'une fenêtre temporelle où le WD doit surveiller le canal de commande de liaison descendante sur la seconde porteuse.

14. WD selon la revendication 10, dans lequel la seconde commande est reçue par le WD sur l'une de la première porteuse ou de la seconde porteuse.

15. WD selon la revendication 10, dans lequel la première commande fournit une indication d'un moment où le WD doit commencer à surveiller le canal de commande de liaison descendante sur la seconde porteuse ou arrêter de surveiller un canal de commande de liaison descendante, ou les deux.
